# EUROPEAN PATENT SPECIFICATION

(11) **EP 1 588 080 B1**
(45) Date of publication and mention of the grant of the patent: **12.09.2007**
(21) Application number: 04701447.7
(22) Date of filing: 12.01.2004
(51) Int. Cl.: F16H 63/44, F16H 61/70

(54) **GEAR ENGAGEMENT METHOD FOR MOTOR VEHICLE GEARBOX**
GANGEINRÜCKVERFAHREN FÜR GETRIEBE EINES KRAFTFAHRZEUGS
PROCEDE D'ENGAGEMENT DE RAPPORT POUR BOITE DE VITESSES DE VEHICULE A MOTEUR

(30) Priority: 15.01.2003 SE 0300075
(43) Date of publication of application: 26.10.2005
(73) Proprietor: Scania CV AB (publ), 151 87 Södertälje (SE)
(72) Inventor: HEDSTRÖM, Lars-Gunnar, S-610 71 Vagnhärad (SE)
(86) International application number: PCT/SE2004/000013
(87) International publication number: WO 2004/079233

(56) References cited:
- SE-B- 467 169
- US-B1- 6 196 944

## Description

The present invention relates to a method for starting-gear engagement in a vehicle gearbox, particularly a truck gearbox, of the kind indicated in the preamble of claim 1.

### State of the art

The kind of vehicle gearbox here concerned has in a conventional manner a main gear section with split gears built in (for low split and high split respectively), crawling gears and a synchronised planetary gear section (for low range and high range). The main gear section usually comprises an input shaft (driven by the vehicle engine via a clutch) with the low-split gearwheel, a mainshaft (coaxial with the input shaft) with the high-split gearwheel and the gearwheels required for the relevant number of basic gear changes (e.g. three), a layshaft with gearwheels for the low-split and high-split positions respectively, gearwheels for other gear ratios and, in a conventional manner, a reverse gear shaft with the reverse gearwheel.

Computerised control systems for gearboxes in truck drivelines are already known. An example which may be quoted of such a control system is Scania's "Opticruise" which enables automatic gearchanges but also allows manual gearchanges when the driver so wishes. In a driveline provided with this known gearbox control system, standard components may be used for both the clutch and the basic gearbox (the main gearbox).

The Opticruise control system is based on combined computer control of engine and gearbox, and the driver need only use the clutch when setting the vehicle in motion from stationary or for precision manoeuvring (so-called marshalling) and when the vehicle has to be braked to stationary. For computer control of an engine in this way to be possible, the engine needs to be provided with an electronically controlled fuel injection system.

When the driver has started the engine and has set the vehicle in motion by conventional operation of the clutch pedal, the continuing progressive upward gear changes (and subsequent downward gear changes) are conducted automatically by the system, at each gear change, adapting the speed of the engine and gearbox without any use at all of the clutch (i.e. without clutch disengagement) or of synchromeshes. The driver thus need not use the clutch again until immediately before the vehicle is braked to stationary. At each gear change the engine speed is regulated so that the speeds of the gearbox input shaft and output shaft coincide with respect to the particular gear which is being engaged. When this has been accomplished, the gear change is effected and completed.

Optimum running characteristics (smooth and exact gear changes, optimum fuel economy, low noise level etc.) for the vehicle and the least possible driveline wear are achieved by the vehicle's various control systems (such as EDC engine control, TC antispin system, ABS non-locking brake system, Opticruise and, where applicable, any retarder) being designed for mutual communication. While the vehicle is in motion, gear changes are normally effected by Opticruise using EDC to control the engine to synchronous speed for the gear which is to be engaged next, which therefore takes place without the driver using the clutch pedal. Both the speed of the engine and its torque are thus adjusted to the level which the gearbox requires for optimum functioning. Gear changes are thus effected at synchronous speed, which means that the gear change forces required will be small.

Truck gearboxes with a larger number of gears (e.g. 14-speed and 16-speed gearboxes) are already known. Such gearboxes constitute multi-group designs.

The introductory part of US patent specification 6.196.944 gives a brief description of how a multi-speed main gear section can be combined with a forward split gear section or a rear range gear section.

A handbook published by the company Robert Bosch GmbH with the title "Automotive Handbook", third edition (1993), refers on page 544 to an example of a 16-speed truck transmission whereby the synchronised main gear section is combined both with a split gear section and with a range gear section, according to the preamble of claim 1.

### Objects of the invention

Since with a semi-automatic gearbox of the abovementioned "Opticruise" type it is in practice normal not to use the synchromeshes in the main gear section while the vehicle is in motion, it would of course be particularly desirable from the design and cost points of view to be able in whole or at least in part to eliminate the need for these synchromesh devices. However, this desirable simplification cannot be applied without further ado, since using an entirely (or partly) unsynchronised main gearbox inevitably entails problems, particularly when engaging the starting gear, since the layshaft then rotates, causing problems of what is known as "scraping" during gear engagement.

A primary object of the present invention is therefore to propose a novel method for rapid starting-gear engagement which makes it possible to use an entirely (or partly) unsynchronised main gearbox without risk of gear engagement scraping.

A further object is to make split gear changes possible without having to be preceded by the main gearbox being placed in a neutral position.

### Summary of the invention

The abovementioned objects are achieved according to invention by applying a method which is adapted to starting-gear engagement and which entails adopting the measures indicated in the characterising part of claim 1.

Primary distinguishing features of the novel method according to the invention are that a multi-speed main gearbox which is unsynchronised on one or more of its gears is used as the main gear section, and that the split gear provided with synchromesh is controlled by a three-position actuator which cooperates with the split gear and by means of which not only a low-split or high-split position but also a defined neutral position can be set in the split gear. When the vehicle comes to a halt, the clutch is disengaged (i.e. the clutch pedal is depressed in the case of a manual type of clutch) and the vehicle's gear selector is placed in neutral, thereby switching the split gear to neutral while the main gearbox is kept in some other position than neutral, i.e. with a gear engaged. This means that not only the layshaft but also all the running wheels will be immobile. When the vehicle is next set in motion, the clutch, which was engaged again, is disengaged and the desired split gear position (low split or high split) is applied by operating the three-position actuator, using the synchromesh of the split gear to brake the gearbox input shaft and a clutch plate connected to the latter. The layshaft will already be immobile. Once this braking of the input shaft has taken place, the split gear can be engaged with the immobile layshaft.

The fact that the synchromesh of the split gear is used for braking the input shaft and the clutch plate thus makes it possible to dispense with the respective synchromeshes in the main gearbox (except the synchromesh of the split gear) without entailing gear engagement scraping problems. Moreover, the reverse gear can also be engaged more quickly without scraping. The synchromesh of the split gear is necessary in all situations for it to be possible to change the split gear and the main gearbox in parallel.

The gear can also be engaged more quickly in that the mass moment of inertia due to the rotating parts is reduced by the layshaft and running wheels already being immobile. In unsynchronised gearboxes, the problem of the layshaft rotating when the starting gear is to be engaged has traditionally been solved by providing a special layshaft brake. The need for such a special layshaft brake, which complicates design work and is expensive, is of course completely eliminated by the layshaft being already immobile and the synchromesh of the split gear being used to brake the input shaft and the associated clutch plate.

Should the driver wish to switch to a different starting gear, this can be done immediately before the synchromesh of the split gear has braked the clutch plate. This can also be accomplished without disengaging the clutch (i.e. without depressing the clutch pedal). If the switch of starting gear is effected with the clutch depressed after the split gear has been applied, this takes place directly in the main gearbox in the same manner as with the assistance of the abovementioned Opticruise control system. The fact that the novel method makes it possible to use an entirely unsynchronised main gearbox, or a main gearbox with only one or, for example, two synchromesh devices, obviates all (or certain) of the synchromesh devices which complicate design work, occupy space and increase costs. Examples of synchromesh components which thereby become unnecessary include synchronising rings (synchromesh cones, latch cones and middle cones) with their associated retaining elements.

To exemplify the design simplification achieved by the possibility of a conventional synchronised gearbox being replaced by an entirely unsynchronised gearbox, the following simple comparison may be illustrative.

In an ordinary synchronised vehicle gearbox it may for example be the case that a synchromesh device situated between a pair of running wheels situated close together on a mainshaft primarily comprises a synchronising sleeve which is connected to, for joint rotation with, the shaft and which itself comprises a carrier in the form of a synchronising hub which is fastened to the shaft and provided with an axially movable synchronising drum, and a synchromesh cone provided with teeth and connected to, for joint rotation with, the respective adjacent running wheel, and a latch cone arranged between the hub and the synchromesh cone. A so-called single synchromesh of this general kind therefore requires for each adjacent running wheel both a synchromesh cone and a latch cone, i.e. each running wheel requires two annular synchronising elements with conical friction surfaces. A so-called double synchromesh requires in addition a middle cone and an inner cone.

In contrast, in an otherwise equivalent but unsynchronised gearbox there is between the two running wheels situated close together an unsynchronised gearchange sleeve connected to, for joint rotation with, the shaft and comprising a simple carrier hub which is fastened to the shaft and is provided with an axially movable shift sleeve, and a clutch disc provided with locking teeth and connected to, for joint rotation with, the respective adjacent running wheel. In an unsynchronised gearbox there is therefore no need for each engageable running wheel to have synchronising elements (synchronising rings) with conical friction surfaces, which means, for the complete gearbox (as compared with a corresponding synchronised gearbox), a very considerable design simplification which leads to smaller space requirement and lower weight and hence significant cost savings. It also reduces the amount of operating force needed, thereby making it possible to use simpler and less expensive actuators.

Further more advanced developments of a method according to the invention are also indicated by the dependent claims.

It is thus preferable to use as the main gear section a main gearbox which is unsynchronised on all its gears. In certain cases, automatic engagement of a preprogrammed starting gear simultaneously with the vehicle coming to a halt may be advantageous. Such a pre-engaged starting gear enables the next start thereafter to be effected very quickly. The method for starting-gear engagement without scraping may be applied both to vehicles with an ordinary manually operated clutch and to vehicles provided with an automated clutch.

### Brief description of the drawings

The invention will now be illustrated with reference to a schematically depicted version of the parts of a truck gearbox with associated computerised control system, based primarily on the starting-gear engagement method according to the invention.

The drawings are as follows:
Fig. 1 depicts schematically control means in a truck cab, an associated computerised control system and a truck engine controlled by the latter, with associated gearbox;
Fig. 2 depicts a longitudinal section through the main gear section of the gearbox, and
Fig. 3 depicts very schematically a system for control of a three-position actuator by which the split gear of the main gear section is controlled.

### Description of a vehicle gearbox in which the invention is applied

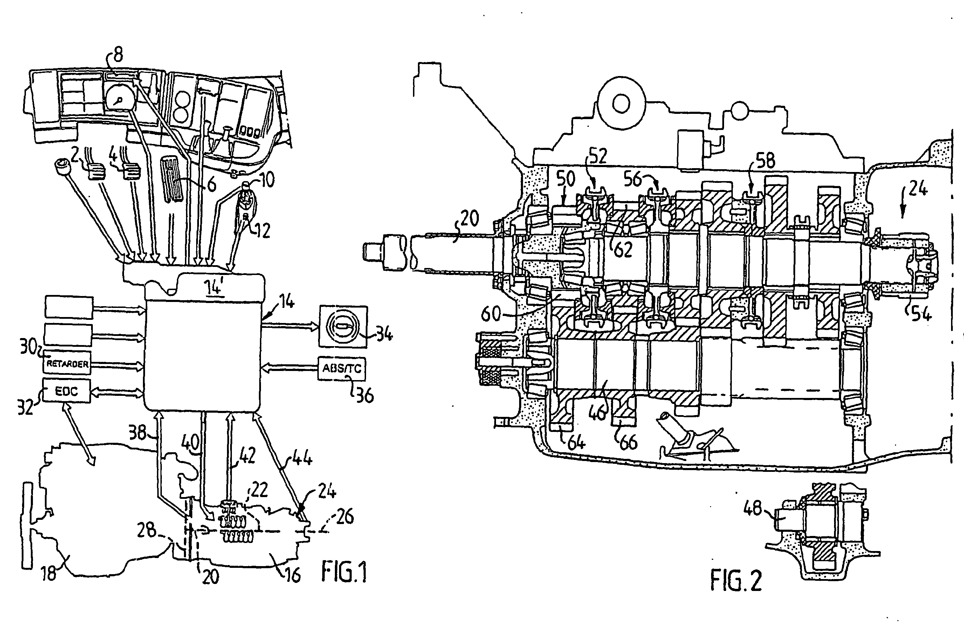

The upper part of Fig. 1 depicts an area of the driver's workstation in the cab of a truck. Only some of the control means depicted are of primary interest for understanding the mode of operation according to the present invention. Among these may be mentioned in particular the clutch pedal 2, the brake pedal 4, the accelerator pedal 6, the gear indicator 8 with character display, the gear selector 10, and the programme selector 12 for selecting Normal or Hill mode.

The freight vehicle concerned is provided with a computerised control system 14 for control of the vehicle's prime mover 18 and its gearbox 16, which is depicted here joined together with the vehicle engine 18, which may be a diesel engine. The control system 14 may for example be of approximately the same type as Scania's "Opticruise". In the engine/gearbox area the input shaft of the gearbox 16 is denoted by ref. 20, the gearbox mainshaft by ref. 22 and an output shaft (from a planetary gear section 24 driven by the mainshaft 22) by ref. 26. A clutch plate connected to the gearbox input shaft 20 is denoted by ref. 28. The clutch plate forms part of the otherwise undepicted clutch operated by the driver via the clutch pedal 2.

The arrows between, on the one hand, the pedals 2, 4, 6, the indicator 8 and the selectors 10, 12 and, on the other hand, the upper region 14' of the control system 14 represent signals paths from sensors coordinated with these units 2 - 12. The control system 14 also has connected to it further units, the most relevant of which in this context are perhaps the retarder unit 30, the EDC unit 32, the exhaust brake 34 and the ABS/TC unit 36. Between the control system 14 and the gearbox 16 there are also respective signal paths 38, 40, 42 and 44 for engine speed, gearchange actuation, supervision/acknowledgement of gearchange movements, and the speed of the output shaft 26.

Referring to Fig. 2, which depicts the gearbox 16 on a larger scale, the main gear section of the gearbox comprises not only the input shaft 20 and the mainshaft 22 but also a layshaft 46 and a reverse gear shaft 48. The main gear section further comprises a two-speed split gear 50 with associated synchromesh device 52. On the output side, the main gear section is provided with a two-speed planetary gear section 24 of which, for the sake of simplicity, Fig. 2 depicts only the sun wheel 54 on the rear end of the mainshaft 22. In addition, the main gear section comprises in a conventional manner a number of running wheels (for the various gear changes) on the mainshaft 22 and a number of gearwheels on the layshaft 46.

For the engagement of desired running wheels with the mainshaft (for the accomplishment of a desired gear ratio, i.e. the desired "gear") the mainshaft also has on it synchromesh devices and/or pure clutch devices with no synchronising capability, such as those denoted by refs. 56 and 58 in Fig. 2. According to the basic principle of the starting-gear engagement method of the present invention, what is used as the main gear section is a multi-speed main gearbox which is unsynchronised on at least one of its gears, preferably on all (or a multiplicity) of the gears.

The split gear 50 comprises a low-split gearwheel 60 supported on the shaft 20 by needle bearings, the synchromesh device 52, a high-split gearwheel 62 supported on the mainshaft 22 by rolling bearings, and low-split and high-split gearwheels 64 and 66 respectively on the layshaft 46. The switching of the split gear is controlled by the same cooperating three-position actuator 68 (i.e. a positioner which can be used to set three different positions) which can be used to set a low-split position, a defined neutral position and a high-split position. When the freight vehicle concerned comes to a halt, the clutch is disengaged by the driver depressing the clutch pedal 2 and the gear selector 10 is moved to its neutral position, then the control system 14 switches the split gear 50 to its defined neutral position while the main gearbox keeps one of its gears (preferably the last one engaged) still engaged, which means that the layshaft 46 and all the running wheels on the mainshaft 22 will be immobile.

At the next start thereafter, the clutch is disengaged (either manually by the driver in a vehicle with a manually operated clutch, or automatically if the vehicle is provided with an automatic clutch) and the desired split-gear position (low split or high split) is applied by the three-position actuator 68 being placed in the split position selected by the driver and/or instigated by a control unit. The synchromesh device 52 of the split gear 50 will thus be used for braking the gearbox input shaft 20 and the clutch plate 28 connected to the latter.

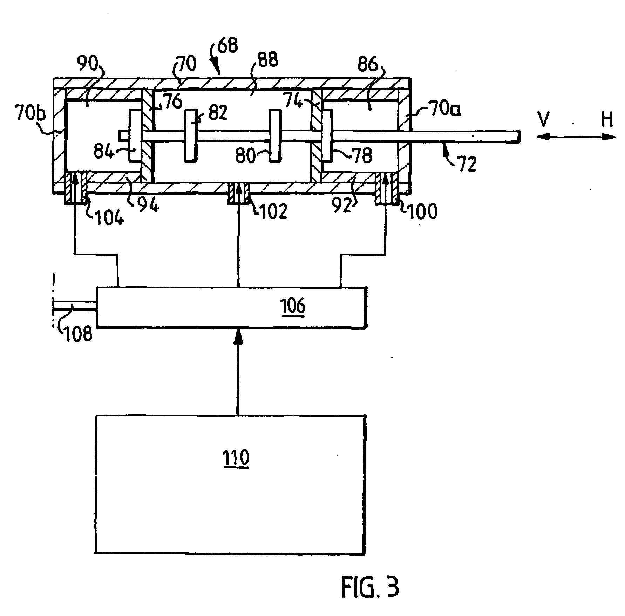

Fig. 3 depicts schematically a control system for controlling the three-position actuator exemplified in this case by a simple type of three-position cylinder 68 here depicted in axial longitudinal section. This three-position cylinder comprises a cylindrical housing 70 with end walls 70a and 70b. Inside the cylinder 68, a motion-transmitting element comprising not only a centrally arranged piston rod 72 which protrudes from the housing 70 via a central aperture in the end wall 70a, and also two disc pistons 74 and 76 supported for movement on the piston rod 72, is supported for axial movement. Also fastened to the piston rod are four locking rings 78, 80, 82 and 84. The disc pistons 74, 76 divide the housing 70 into three chambers, viz. a high-split air chamber 86, a neutral air chamber 88 and a low-split air chamber 90. Fig. 3 shows the motion-transmitting element in a neutral position whereby the pistons 74, 76 are pushed outwards against stop sleeves 92 and 94 within the end walls 70a and 70b.

In the shell wall of the housing 70 there are also three compressed air inlets 100, 102 and 104 for compressed air supply to the chambers 86, 88, 90. Each compressed air inlet is connected via a respective associated pressure signal line to a valve block 106 (comprising, for example, solenoid valves) which is supplied with compressed air via a feed line 108 from a compressed air source. The compressed air delivery from the valve block to the chambers 86, 88 and 90 is controlled by a preferably microcomputer-based control unit 110 which may be comprised in or form part of the control system 14.

If for example the control unit 110 instigates compressed air supply (via the inlet 104) to the low-split air chamber 90, the first result is that the disc piston 76 moves to the right in the diagram until stopped by the locking ring 82 fastened to the piston rod, after which the continuing rightward movement of the piston causes the piston rod 72 to move to the right until the movement is stopped by the fixed locking ring 80 abutting against the piston 74 abutting in its turn against the stop sleeve 92. The piston rod 72 has thus completed its longitudinal travel (in the movement direction H) to its low-split engagement position. Correspondingly, the piston rod 72 may be caused to perform its longitudinal travel (in the direction V) to the high-split engagement position by a corresponding compressed air supply (via the inlet 100) to the high-split air chamber 86.

When the vehicle comes to a halt and the clutch is accordingly disengaged, it is therefore also possible at the same time, through the cooperation of the control system 14, to cause automatic engagement of a preprogrammed starting gear instead of the gear engaged at the time. Such an automatic method may be employed to ensure that the best possible conditions are created for enabling the next start thereafter to be effected quickly.

## Claims

1. A method for starting-gear engagement in a vehicle gearbox (16) in a vehicle, particularly a truck gearbox, which comprises a main gear section which is provided with input shaft (20), mainshaft (22), layshaft (46) and reverse gear shaft (48) and has at least an integrated two-speed split gear (50) for low split and high split, crawling gear, and a preferably two-speed synchronised planetary gear section (24) with a low-speed range and a high-speed range, **characterised**
**in that** the main gear section takes the form of a multi-speed main gearbox unsynchronised on at least one of its gears,
that the split gear (50) provided with synchromesh (52) is controlled by a three-position actuator (68) which cooperates with said split gear and which can be used to place the split gear not only in low-split and high-split positions but also in a defined neutral position,
that when the vehicle comes to a halt, a clutch is disengaged and a gear selector (10) in the vehicle is moved to neutral, followed by the split gear (50) being switched to neutral while the main gearbox remains in some other position than neutral, i.e. with a gear engaged,
and that at the next start thereafter the clutch is disengaged and a desired split-gear position is applied by operating the three-position actuator (68), with use of the synchromesh (52) of the split gear (50) to brake the gearbox input shaft (20) and a clutch plate (28) connected to the gearbox input shaft (20), thereby making it possible, immediately after this braking, for the split gear (50) to be engaged with the immobile layshaft.

2. A method according to claim 1, **characterised in that** a main gearbox which is unsynchronised on two or more of its gears, preferably on all of its gears, is used as the main gear section.

3. A method according to claim 1 or 2, **characterised in that** when the vehicle comes to a halt and the clutch is accordingly disengaged, then a preprogrammed starting gear is simultaneously engaged automatically in order to optimise the situation with a view to enabling the next start thereafter to be effected as quickly as possible.

4. A method according to any one of claims 1-3, **characterised in that** the clutch used is a clutch operable manually by the vehicle's driver via a clutch pedal (2).

5. A method according to any one of claims 1-3, **characterised in that** the clutch used is an entirely automated clutch.

6. A method according to any one of the foregoing claims, **characterised in that** the three-position actuator (68) used is a three-position positioner of the piston-and-cylinder type which is valve-controlled via the control system (14) and preferably takes the form of a solenoid-valve-controlled compressed air cylinder.

## Patentansprüche

1. Verfahren zum Einrücken eines Anfahr-Gangs bei einem Fahrzeug-Getriebe (16) in einem Fahrzeug, insbesondere einem Lastwagen-Getriebe, welches umfasst: einen Hauptgetriebe-Abschnitt, welcher mit einer Eingangswelle (20), einer Hauptwelle (22), einer Vorgelegewelle (46) und einer Rückwärtsgang-Welle (48) versehen ist, und zumindest aufweist: einen integrierten, in zwei Geschwindigkeiten unterteilten Gang (50) für einen niedertourigen und einen hochtourigen Kriechgang, und einem bevorzugter Weise zwei Geschwindigkeiten aufweisenden synchronisierten Planetengetriebeabschnitt (24) mit einem Niedergeschwindigkeitsbereich und einem Hochgeschwindigkeitsbereich, **dadurch gekennzeichnet,**
**dass** der Hauptgetriebe-Abschnitt die Form eines Mehrgang-Hauptgetriebes annimmt, welches in zumindest einem seiner Gänge unsynchronisiert ist,
**dass** der mit einem Synchrongetriebe (52) versehene unterteilte Gang (50) von einem Drei-Positionen-Aktuator (68) gesteuert wird, welcher mit dem unterteilten Gang zusammenwirkt, und welcher dazu verwendet werden kann, den unterteilten Gang nicht nur in eine niedertouriger Gangposition und eine hochtouriger Gangposition, sondern auch in eine definierte Neutral-Position zu platzieren,
**dass** beim Anhalten des Fahrzeugs eine Kupplung getrennt wird, und ein Gangwechsler (10) im Fahrzeug auf Neutral bewegt wird, wonach der unterteilte Gang (50) auf Neutral umgeschaltet wird, während das Hauptgetriebe in einer von Normal abweichenden Position, das heißt mit einem eingerückten Gang, verbleibt,
und **dass** beim darauffolgenden nächsten Anfahren die Kupplung getrennt wird, und mittels Betätigens des Drei-Positionen-Aktuators (68) unter Verwendung des Synchrongetriebes (52) des unterteilten Gangs (50) zum Abbremsen der Getriebe-Eingangswelle (20), und einer mit der Getriebe-Eingangswelle (20) verbundenen Kupplungs-Platte (28) eine gewünschte Position des unterteilten Gangs appliziert wird, wodurch es möglich wird, dass unmittelbar nach diesem Abbremsen der unterteilte Gang (50) mit der unbeweglichen Vorgelegewelle eingerückt wird.

2. Verfahren nach Anspruch 1, **dadurch gekennzeichnet, dass** ein Hauptgetriebe, welches in zweien oder mehreren seiner Gänge, in bevorzugter Weise in allen seiner Gänge, unsynchronisiert ist, als der Hauptgetriebe-Abschnitt verwendet wird.

3. Verfahren nach Anspruch 1 oder 2, **dadurch gekennzeichnet, dass** ein vorprogrammierter Anfahr-Gang automatisch simultan eingerückt wird, wenn das Fahrzeug zum Halten kommt und die Kupplung dementsprechend getrennt wird/ist, um die Situation im Hinblick darauf zu optimieren, dass das anschließende nächste Anfahren so schnell wie möglich bewirkt wird.

4. Verfahren nach einem der Ansprüche 1-3, **dadurch gekennzeichnet, dass** die verwendete Kupplung eine vom Fahrzeug-Fahrer mittels eines Kupplungs-Pedals (2) manuell betätigbare Kupplung ist.

5. Verfahren nach einem der Ansprüche 1-3, **dadurch gekennzeichnet, dass** die verwendete Kupplung eine vollständig automatische Kupplung ist.

6. Verfahren nach einem der vorhergehenden Ansprüche, **dadurch gekennzeichnet, dass** der verwendete Drei-Positionen- Aktuator (68) eine Drei-Positionen-Positioniervorrichtung vom Kolben-und-Zylinder-Typ ist, welche mittels des Steuersystems (14) ventilgesteuert ist, und in bevorzugter Weise die Form eines mittels eines Solenoid-Ventils gesteuerten Zylinders für komprimierte Luft aufweist.

## Revendications

1. Procédé pour enclencher la prise de vitesse dans une boîte de vitesses de véhicule (16) dans un véhicule, notamment une boîte de vitesses de camion qui comprend une section d'engrenage principale qui est munie d'un arbre d'entrée (20), d'un arbre secondaire (22), d'un arbre intermédiaire (46) et d'un arbre à engrenage inverse (48) et a au moins un engrenage intermédiaire à deux vitesses intégré (50) pour le bas rapport et le haut rapport, un engrenage de rampement et, de préférence, une section d'engrenage planétaire synchronisé à deux vitesses (24) avec une gamme de basse vitesse et une gamme de haute vitesse, **caractérisé :**
**en ce que** la section d'engrenage principale affecte la forme d'une boîte de vitesses principale multivitesses, non synchronisées sur au moins un de ses engrenages,
**en ce que** l'engrenage intermédiaire (50) muni d'une synchronisation (52) est commandé par un dispositif d'actionnement à trois positions (69) qui coopère avec ledit engrenage intermédiaire et qui peut être utilisé pour placer l'engrenage intermédiaire non seulement dans les positions à bas rapport et à haut rapport mais également dans une position neutre définie,
**en ce que** lorsque le véhicule s'arrête, un embrayage est mis hors de prise et un sélecteur d'engrenage (10) dans le véhicule est déplacé vers la position neutre, suivi par l'engrenage intermédiaire (50) qui est commuté vers la position neutre, tandis que la boîte de vitesses principale reste dans une certaine autre position que la position neutre, c'est-à-dire avec un engrenage en prise,
et **en ce que** lors de l'enclenchement suivant par la suite, l'embrayage est libéré et une position d'engrenage intermédiaire désirée est appliquée en actionnant le dispositif d'actionnement à trois positions (68) avec l'utilisation de la synchronisation (52) de l'engrenage intermédiaire (50) pour freiner l'arbre d'entrée de la boîte de vitesses (20) et une plaque d'embrayage (28) reliée à l'arbre d'entrée de la boîte de vitesses (20), rendant ainsi possible immédiatement après ce freinage que l'engrenage intermédiaire (50) soit en prise avec l'arbre intermédiaire immobile.

2. Procédé selon la revendication 1, **caractérisé en ce que** la boîte de vitesses principale, qui est non synchronisée sur deux ou plusieurs de ses engrenages, de préférence sur tous ses engrenages, est utilisée comme la section d'engrenage principale.

3. Procédé selon la revendication 1 ou 2, **caractérisé en ce que** lorsque le véhicule s'arrête et que l'embrayage est par conséquent mis hors de prise, alors un engrenage d'enclenchement pré-programmé est simultanément mis en prise automatiquement afin d'optimiser la situation en vue de permettre l'enclenchement suivant par la suite aussi rapidement que cela est possible.

4. Procédé selon l'une quelconque des revendications 1 à 3, **caractérisé en ce que** l'embrayage utilisé est un embrayage pouvant être actionné manuellement par le conducteur du véhicule par l'intermédiaire d'une pédale d'embrayage (2).

5. Procédé selon l'une quelconque des revendications 1 à 3, **caractérisé en ce que** l'embrayage utilisé est un embrayage entièrement automatique.

6. Procédé selon l'une quelconque des revendications précédentes, **caractérisé en ce que** le dispositif d'actionnement à trois positions (68) utilisé est un dispositif de positionnement à trois positions du type piston et cylindre qui est commandé par clapet, par l'intermédiaire d'un système de commande (14) et affecte, de préférence, la forme d'un cylindre à air comprimé commandé par une soupape à solénoïde.
